# EUROPEAN PATENT APPLICATION

(11) **EP 1 111 382 A1**
(43) Date of publication of application: **27.06.2001**
(21) Application number: 00127762.3
(22) Date of filing: 19.12.2000
(51) Int. Cl.: G01N 31/22

(54) **Gasoline test kit**

(30) Priority: 23.12.1999 US 173004 P
(71) Applicant: TECUMSEH PRODUCTS COMPANY, Tecumseh Michigan 49286 (US)
(72) Inventor: Ditter, Stephen D., Fond du Lac, Winconsin 54935 (US); McDonnel, Dennis W., Clinton, Michigan 49236 (US)
(74) Representative: Riebling, Peter, Dr.-Ing.

(57) **Abstract**

A test kit and method are provided for determining the freshness of a gasoline sample (18). The kit includes a test strip (10) impregnated with a chemical component, such as an enzyme, the chemical component reactive with peroxides and exhibiting a color change upon reaction with peroxides. The test strip may include a test pad (16) mounted thereon, with the chemical component impregnated within the test pad. An activator solution (20) may be provided for activating the test strip to initiate the color change. To determine whether a sample of gasoline is fresh or stale, the test strip is contacted with the gasoline sample, allowed to dry, contacted with the activator solution if one is needed, and inspected for observation of a color change.

## Description

The present invention relates to gasoline, and in particular, to a test kit and method for detecting peroxides in a gasoline sample to determine whether the sample of gasoline is fresh or stale.

Gasoline is a refined mixture of several different hydrocarbons such as hexane, heptane and octane, for example. Gasoline is highly flammable, and is used in internal combustion engines where it is mixed with air and ignited to move a piston to create mechanical motion.

As gasoline ages, the hydrocarbons within the gasoline degrade through oxidation in the presence of ambient air and moisture to form a variety of oxidation products including peroxides. As the level of peroxides increases within the gasoline as the gasoline ages, the gasoline becomes "stale" and less effective for use in internal combustion engines. In addition, the oxidation products in stale gasoline cause clogged or gummed-up fuel lines and carburetors, which may lead to engine starting failures.

Current methods of detecting peroxides in a gasoline sample to determine whether gasoline is fresh or stale involve intricate scientific analysis in a technical laboratory, using analysis techniques such as gas chromatography, for example. Disadvantageously, such methods require substantial time and resources, and are not a practical method for users of gasoline to determine whether a sample of gasoline is fresh or stale.

What is needed is a quick and easy method to determine whether gasoline is fresh or stale, which may be performed outside a scientific laboratory by a person not trained with scientific or technical knowledge.

The present invention provides a test kit and method for determining whether a gasoline sample is fresh or stale by detecting the presence of peroxides in the gasoline sample. The kit includes a test strip impregnated with a chemical component which is reactive with peroxides, and the chemical component exhibits a color change upon reaction with the peroxides. The kit also preferably includes an activator solution to initiate the color change after the test strip is contacted with the gasoline sample. A user may determine the freshness of a gasoline sample by contacting the test strip with the gasoline sample, allowing the test strip to dry, contacting the activator solution with the test strip if an activator solution is needed, and then inspecting the color of the test strip.

In one form thereof, a method is provided for determining the presence of peroxides commonly present in an aged gasoline sample, including the steps of providing a test strip impregnated with a chemical component reactive with peroxides and exhibiting a color change upon reaction with peroxides; contacting the test strip with the gasoline sample; contacting the test strip with an activator solution if one is needed; and inspecting the test strip for a color change.

In another form thereof, a kit is provided for detecting the presence of peroxides in a gasoline sample, the kit including an activator solution, and a test strip having a chemical component impregnated therein, the chemical component reactive with peroxides and exhibiting a color change upon reaction with peroxides.

In still another form thereof, a test strip is provided for detecting the presence of peroxides in a gasoline sample. The test strip, including a strip of substrate material, the substrate material having an enzyme impregnated therein, the enzyme reactive with peroxides and exhibiting a color change upon reaction with peroxides.

The test strip may optionally include a test pad mounted thereon, with the enzyme impregnated within the test pad. Additionally, a reference color chart may be provided for comparing the color observed on the test strip with standard colors on the reference color chart. The activator solution may be deionized or distilled water.

The above-mentioned and other features and advantages of the invention, and the manner of attaining them, will become more apparent and the invention itself will be better understood by reference to the following description of an embodiment of the invention taken in conjunction with the accompanying drawings, wherein:
Fig. 1 is a perspective view of a test strip with a reagent test pad mounted thereon;
Fig. 2A is a perspective view illustrating the dipping of the test strip into the gasoline sample;
Fig. 2B is a perspective view illustrating removal of the test strip from the gasoline sample to allow the test strip to dry;
Fig 2C is a perspective view illustrating wetting of the test strip with an activator solution; and
Fig. 2D is a perspective view illustrating comparison of the color observed on the test strip with standard colors on a reference color chart.

Corresponding reference characters indicate corresponding parts throughout the several views. The exemplification set out herein illustrates one preferred embodiment of the invention, in one form, and such exemplification is not to be construed as limiting the scope of the invention in any manner.

A test kit and method are provided for determining whether a sample of gasoline is fresh or stale. The test kit includes a test strip impregnated with a chemical component which is reactive with peroxides, and exhibits a color change upon reaction with peroxides. An activator solution is preferably provided to initiate the color change of the chemical component after the test strip is contacted with the gasoline sample. The test strip may alternatively include a test pad mounted thereon, with the chemical component impregnated within the test pad.

Suitable test strips include QUANTOFIX® Peroxide 25 test strips, manufactured by Macherey-Nagel of Duren, Germany. (QUANTOFIX® is a trademark registered in Germany to Macherey Nagel & Co.). The QUANTOFIX® Peroxide 25 test strips include an enzyme which is reactive with peroxides and exhibits a color change upon reaction with peroxides.

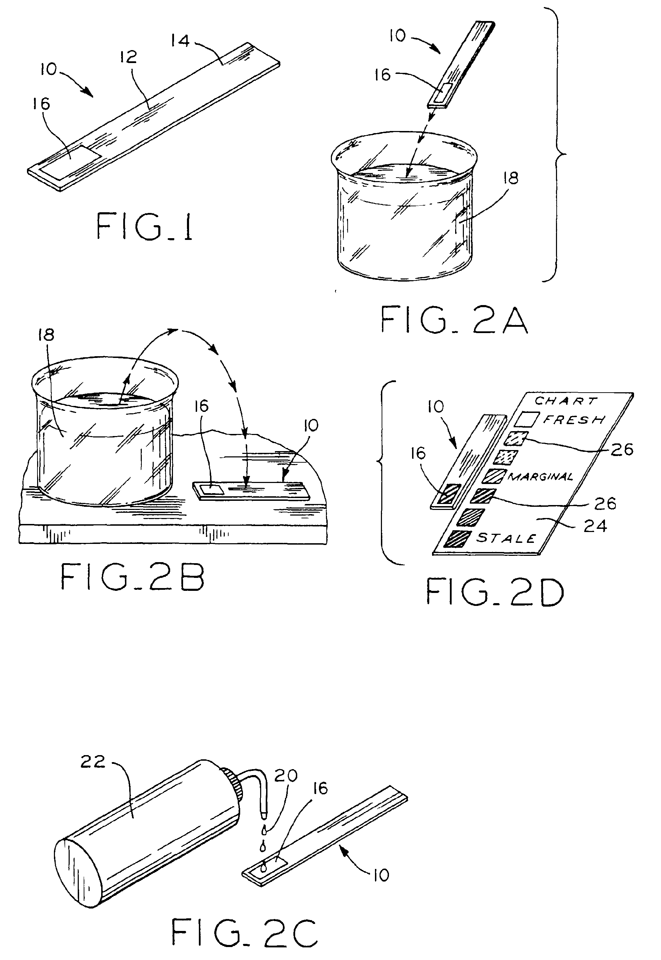

Referring to the drawings, test strip 10, as shown in Fig. 1, includes a rigid backing material 12, such as polystyrene, a gripping portion 14, and a test pad 16 which is mounted on rigid backing material 12. The test pad 16 includes a chemical component, such as an enzyme, impregnated therein, which chemical component is reactive with peroxides, and exhibits a color change upon reaction with peroxides.

Steps for determining whether a sample of gasoline is fresh or stale are shown in Figs. 2A through 2D. First, a test strip 10 is removed from the container (not shown) in which test strips 10 are stored, followed by resealing the container immediately thereafter. Referring to Fig. 2A, test strip 10 is then dipped into a gasoline sample 18 such that test pad 16 is submerged in gasoline sample 18. Alternatively, a portion of gasoline sample 18 may be applied to test pad 16 by dropper, pipet, or other similar manner. Test strip 10 is then withdrawn from gasoline sample 18, as shown in Fig. 2B, and test pad 16 is allowed to dry upon evaporation of excess gasoline.

Referring to Fig. 2C, after test pad 16 is dry, an activator solution 20 may be applied to wet test pad 16. Activator solution 20 may optionally be applied to test pad 16 almost immediately after contact with gasoline sample 18, even if test pad 16 is not dry. Activator solution 20 may be deionized or distilled water. Activator solution 20 may be applied to test pad 16 dropwise with plastic squeeze bottle 22 as shown in Fig. 2C, or may be applied dropwise by dropper, pipet, or other similar manner. Typically, only a single drop of activator solution 20 is required to be applied to test pad 16, but a greater amount thereof may be needed, depending on the size of test pad 16. After activator solution 20 is applied to test pad 16, activator solution 20 is shaken off of test pad 16, and the color change (if any) on test pad 16 is allowed to develop for observation by a user. The color change on test pad 16 may be read almost immediately after activation solution 20 is applied thereto, however, a color development time of 2-3 minutes is typically allowed to pass before the color change on test pad 16 is observed by a user.

As shown in Fig. 2D, the color observed on test pad 16 may be compared with a reference chart 24 to indicate the relative freshness of gasoline sample 18. Reference chart 24 contains a plurality of color blocks 26, ranging in color from white through various shades of progressively darker light blue colors, defining a relative scale of standard colors which may be compared with the color observed in test pad 16 to determine the relative freshness of gasoline sample 18.

After performing the above steps, test pad 16 remains white in color when gasoline sample 18 does not contain peroxides or if gasoline sample 18 contains a negligible amount of peroxides, indicating that gasoline sample 18 is fresh. Test pad 16 generally turns from white to a light blue color when gasoline sample 18 contains an unacceptable amount of peroxides. An unacceptable amount of peroxides is typically about 5 mg of peroxide per liter of gasoline.

### Example I

### Tests using test strips with gasoline samples of varying age.

Gasoline samples of varying age were obtained. The age of each gasoline sample is herein designated as "fresh" (newly purchased); "slightly stale" (2-3 months old); "moderately stale" (greater than 6 months old); "very stale" (greater than 1 year old); and "extremely stale" (several years old). QUANTOFIX® Peroxide 25 test strips were contacted with the samples, allowed to dry, contacted with the activator solution, and the color of the test pad was then observed, as described above. The following results were observed at the indicated time intervals following contacting the test strips with the activator solution:

**Table I**

| Observed test pad colors at two time intervals for gasoline samples of varying age. | | |
|---|---|---|
| **"Freshness" of Gasoline Samples** | **Colors Observed** | |
| | After 15 Seconds | After 3 Minutes |
| Fresh | White (No peroxides) | White (No peroxides) |
| Slightly stale | Extremely light blue | Extremely light blue to very light blue |
| Moderately stale | Very light blue | Very light blue |
| Very stale | Light blue | Moderate blue |
| Extremely stale | Extremely light blue | Light blue |

As indicated above, a test strip remained white after testing with the fresh gasoline sample. Other test strips turned various shades of a light blue color after testing with gasoline samples other than the fresh gasoline sample. Generally, the shade of light blue color observed became somewhat darker as gasoline samples of increasing age were tested. In addition, the shades of light blue color observed became darker after 3 minutes than after 15 seconds, as the color change was allowed to further develop.

Although a broad example which incorporates the present invention has been described above, it is to be understood that the present invention is not to be limited by the example disclosed herein. Indeed, the disclosure and example above teach one of ordinary skill a virtually limitless number of conditions which would be within the scope of the claims appended hereto.

Further, while this invention has been described as having a preferred design, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A method for determining the presence of peroxides commonly present
in an aged gasoline sample (18), characterized by:
providing a test strip (10), said test strip impregnated with a chemical component, said chemical component reactive with peroxides and exhibiting a color change upon reaction with peroxides;
contacting said test strip with the gasoline sample;
then inspecting said test strip for a color change.

2. The method of Claim 1, characterized in that said test strip (10)
includes a test pad (16) thereon, said test pad impregnated with said chemical component.

3. The method of any of the preceding claims, characterized in that said
chemical component is an enzyme.

4. The method of Claim 1, characterized by the further step of allowing
said test strip (10) to dry after said test strip is contacted with the gasoline sample (18).

5. The method of Claim 4, characterized by the further steps of providing
an activator solution (20) and contacting said test strip (10) with said activator solution after said test strip is allowed to dry.

6. The method of Claim 5, characterized in that said activator solution (20) comprises one of deionized water and distilled water.

7. The method of any of the preceding claims, characterized in that the
step of contacting said test strip (10) with the gasoline sample (18) comprises dipping said test strip into the gasoline sample.

8. The method of any of the preceding claims, characterized by the further steps of providing a reference chart (24) and comparing said test strip (10) to said reference chart after inspecting said test strip for a color change.
